# FASCICULE DE BREVET EUROPEEN

(11) **EP 0 391 816 B1**
(45) Date de publication et mention de la délivrance du brevet: **19.05.1993**
(21) Numéro de dépôt: 90420167.0
(22) Date de dépôt: 03.04.1990
(51) Int. Cl.: B21C 35/02

(54) **Dispositif extracteur pour presse d'extrusion**
Strang-Ausziehvorrichtung für eine Strangpresse
Work drawing-off device for an extrusion press

(30) Priorité: 05.04.1989 FR 8905159
(43) Date de publication de la demande: 10.10.1990
(73) Titulaire: VALINOX, F-92100 Boulogne-Billancourt (FR)
(72) Inventeur: Peytavin, Pierre Guy, F-92200 Neuilly-Sur-Seine (FR)
(74) Mandataire: Desolneux, Jean-Paul Charles

(56) Documents cités:
- DE-A- 1 452 374
- DE-A- 2 045 279
- DE-C- 508 165
- FR-A- 1 216 807
- US-A- 1 776 103

## Description

Le dispositif extracteur qui fait l'objet de l'invention concerne les presses utilisées pour l'extrusion à chaud de tubes métalliques à travers une filière. Il concerne plus particulièrement l'extrusion d'aciers de tous types ou d'autres métaux ou alliages à température généralement supérieure à 900° C avec utilisation de verre comme lubrifiant.

En fin d'extrusion de tubes, lorsqu'on arrête la poussée de l'outil de presse, il reste généralement en amont de la filière une portion de métal non transformée. Cette portion peut être plus ou moins importante - de l'ordre de quelques pour cent du poids de la billette de départ - et avoir des formes variables. Cette portion de métal non filée peut par exemple prendre la forme d'un culot restant bloqué en fin de filage dans la partie avant du conteneur ou bien encore la forme d'une extrémité de tube plus ou moins régulière.

On se trouve alors en général dans l'obligation de sectionner le tube le plus près possible en amont de la filière pour pouvoir l'extraire de la filière par l'aval. Le sectionnement du tube intervient après un recul suffisant du conteneur et de l'aiguille de filage dont l'extrémité aval se trouve engagée dans le tube en aval de la filière, recul qui provoque en général un léger recul du tube filé vers l'amont à travers la filière.

Une fois le sectionnement réalisé, l'extraction du tube à travers la filière vers l'aval se fait généralement en repoussant l'extrémité amont du tube par le résidu de métal coincé dans le conteneur qui est à nouveau avancé.

Cette opération d'extraction du tube de la filière par poussée de l'amont vers l'aval a l'inconvénient majeur de rendre inutilisable, pour la préparation du cycle d'extrusion suivant, le conteneur et l'aiguille et entraîne une diminution globale des cadences d'extrusion très importante.

Le document DE A 1452374 décrit un dispositif extracteur monté en aval de la filière d'une presse d'extrusion permettant d'extraire l'extrémité amont d'un profilé métallique de la filière après extrusion. Ce dispositif comporte des mâchoires de serrage qui sont constituées par des lamelles métalliques de relativement faible épaisseur ayant une forme sensiblement demi-circulaire montées côte à côte, de façon excentrée, libres en rotation, sur un arbre perpendiculaire au plan de ces lames. Cet arbre est horizontal, perpendiculaire à l'axe d'extrusion et monté sur le chariot extracteur apte à être tracté sur une glissière suivant l'axe d'extraction. Au repos, les lames viennent par leur propre poids en appui sur la plaque de base du chariot. Un moyen de relevage les soulève pour laisser passer le profilé en cours d'extrusion. L'extrusion achevée, on laisse retomber librement les lamelles par rotation autour de l'arbre. Celles qui sont au-dessus du profilé retenu en amont dans la filière viennent au contact de celui-ci et assurent son coincement contre la plaque de base du chariot. La traction de ce chariot suivant l'axe d'extrusion renforce ce coincement et provoque l'extraction du profilé de la filière.

L'exemple donné dans ce document montre que le profilé qui est une cornière est ainsi coincé par une lamelle qui exerce son action de serrage sur l'arête de cette cornière. On se rend compte que, si on applique ce dispositif à l'extraction d'un tube, obtenu par extrusion à haute température, la force de serrage exercée par une telle lamelle, située juste au-dessus de l'axe du tube, en contact avec une génératrice de ce tube parallèle au plan de cette lamelle, dépasse inévitablement la limite de résistance à la déformation de ce tube porté à sa température d'extrusion.

On se rend compte aussi que la force de serrage exercée par la lamelle sur le produit obtenu par extrusion est fonction de la force de traction et que celle-ci dépend de la force de retenue exercée par la filière sur l'extrémité amont de ce produit, force qui dépend notamment de la quantité de métal restant dans la filière.

On a recherché la possibilité de développer un dispositif extracteur permettant, à partir d'un tube présentant une extrémité bloquée en amont de la filière mais débarrassée de la portion de métal non transformée, d'extraire ce tube à travers la filière sans provoquer sur ce tube chaud de déformations locales ou générales ou de défauts locaux ou généraux du type par exemple incrustations ou changements de dimensions par allongement résultant de l'application sur le tube des efforts de traction nécessaires à l'extraction.

L'extrémité bloquée en amont de la filière mais débarrassée de la portion de métal non transformée peut être une extrémité sectionnée comme expliqué plus haut, la coupe pouvant présenter une bavure ou non, ou bien une extrémité plus ou moins régulière résultant d'un filage quasi complet mais restée cependant dans la filière ou en amont de celle-ci, le cas du filage quasi complet étant assez rare.

On a recherché également la possibilité de supprimer, chaque fois que la quantité de métal du tube encore engagée dans la filière après extrusion est relativement faible, l'opération de sectionnement de ce tube au voisinage amont de la filière. On a recherché également la possibilité d'obtenir un tel résultat sans endommager les parois du tube par serrage au moyen d'une pince ou de tout autre outil. On a recherché aussi la possibilité d'éviter toute prolongation notable du cycle opératoire qui pourrait être causée par l'exécution d'une opération supplémentaire.

Le dispositif qui fait l'objet de l'invention permet de résoudre le problème ainsi posé de façon particulièrement efficace. Il permet de dégager le tube obtenu par extrusion de la filière toutes les fois qu'une quantité relativement limitée de matière reste retenue à l'intérieur ou en amont de celle-ci. Il permet aussi d'effectuer ce dégagement dans un temps très court. Il peut permettre aussi, dans la plupart des cas, de combiner cette extraction avec une étape suivante de dégagement transversal du tube obtenu, à la suite de laquelle l'équipement de presse, en aval du conteneur, est à nouveau disponible, sans délai supplémentaire pour la mise en route du cycle d'extrusion suivant.

De la façon la plus générale, le dispositif extracteur pour tube métallique obtenu par extrusion à chaud à travers la filière d'une presse qui fait l'objet de l'invention, permet d'extraire l'extrémité amont de ce tube chaud de la filière sans endommager le tube. Il comporte, disposé sur la ligne de sortie du tube en aval de la filière, un moyen de préhension de ce tube comprenant un ensemble de doigts métalliques élastiques qui coopèrent avec une surface d'appui. L'une des deux extrémités de chacun de ces doigts est solidaire d'un moyen d'entraînement et de serrage ; ce moyen permet de déplacer simultanément ces doigts de façon à les mettre en contact, dans une zone écartée de l'extrémité solidaire du moyen d'entraînement et de serrage, avec la paroi extérieure du tube et à exercer une force de serrage sur le tube de façon à l'appliquer contre une surface d'appui, ce serrage entraînant seulement une déformation élastique des doigts et la contrainte exercée sur la paroi du tube n'entraînant pas de déformation permanente inacceptable. La longueur de tube sur laquelle agissent les doigts peut être répartie en une ou plusieurs zones. Enfin le dispositif comprend un moyen de traction relié de façon directe ou indirecte au moyen de préhension qui permet de déplacer celui-ci et donc l'ensemble des doigts parallèlement à l'axe d'extrusion, en direction de l'aval, avec une force de traction au moins égale à la force nécessaire pour extraire l'extrémité arrière de ce tube de la filière, le nombre des doigts et la pression exercée par chacun étant tels qu'aucun glissement relatif du tube par rapport aux doigts et à la surface d'appui ne se produise au cours de l'extraction de l'extrémité amont du tube chaud de la filière et que le tube ne soit pas détérioré localement par application des doigts ou soumis à une contrainte générale entraînant des déformations permanentes lors de l'extraction de l'extrémité arrière de la filière. Les tubes auxquels s'applique le dispositif peuvent être de section circulaire ou non.

Avantageusement l'ensemble de doigts comporte un minimum de 10 doigts agissant sur une longueur de tube totale d'au moins 50 cm.

De façon particulièrement avantageuse, le moyen d'entraînement et de serrage des doigts comporte au moins un arbre, sensiblement parallèle à l'axe d'extrusion, avec lequel chaque doigt est solidarisé par une de ses extrémités et au moins un moyen moteur qui entraîne en rotation cet arbre en exerçant sur celui-ci un couple déterminé et réglable de façon que les doigts viennent en appui élastique contre la paroi du tube en exerçant sur celui-ci la pression voulue.

De préférence, la surface d'appui se trouve au-dessous du tube et l'ensemble des doigts vient au contact du tube au-dessus de celui-ci, de façon à plaquer le tube contre la surface d'appui.

De préférence également, la surface d'appui est solidaire d'une goulotte qui assure le guidage du tube au moment de l'extrusion. De préférence également, la surface d'appui d'une part et l'ensemble des doigts d'autre part sont reliés entre eux de façon à ne pas pouvoir se déplacer de façon relative les uns par rapport aux autres suivant l'axe d'extrusion, le moyen de traction se trouvant ainsi relié à la fois à l'ensemble des doigts et à la surface d'appui.

De préférence, la surface d'appui est supportée par un moyen support, tel qu'un berceau, mobile parallèlement à l'axe d'extrusion grâce à des moyens de guidage tels que des galets se déplaçant sur des rails. Dans le cas où la surface d'appui est solidaire d'une goulotte, l'ensemble est avantageusement monté sur un berceau muni de moyens de guidage pour son déplacement parallèlement à l'axe d'extrusion sous l'action du moyen de traction. De façon particulièrement avantageuse la goulotte est articulée par rapport au berceau suivant un axe parallèle à l'axe d'extrusion, un moyen de basculement permettant de faire tourner la goulotte autour de cet axe, après extraction du tube de la filière et desserrage des doigts, de façon à libérer la goulotte et permettre l'exécution du cycle d'extrusion suivant.

Des moyens de rappel permettent avantageusement de ramener les moyens de préhension à leur position initiale en fin de cycle opératoire. Lorsque ces moyens de préhension comprennent une surface d'appui solidaire d'une goulotte, les moyens de rappel sont disposés de façon à ramener l'ensemble à la position initiale en fin de cycle opératoire.

Ainsi le moyen de préhension permet, grâce à ses doigts, de répartir la force de serrage sur la longueur du tube chaud correspondant à l'ensemble des doigts, chaque doigt réagissant de façon indépendante, malgré le moyen commun d'entraînement et de serrage pour s'adapter à la géométrie locale du tube. De la sorte le dispositif peut appliquer la force juste nécessaire pour l'extraction du tube chaud et éviter les surcontraintes locales sur le tube chaud qui entraîneraient des déformations ou des incrustations en peau, défauts rendant le tube inutilisable.

L'exemple et les figures ci-après décrivent, de façon non limitative, un mode particulier de réalisation du dispositif suivant l'invention.

La figure 1 est une vue d'ensemble, en élévation, d'un dispositif suivant l'invention.

La figure 2 est une vue de dessus du dispositif de la figure 1.

La figure 3 est une vue en coupe suivant le plan A-A de la figure 2.

La figure 4 est une vue en plan d'un doigt utilisé comme composant essentiel du moyen de préhension suivant l'invention.

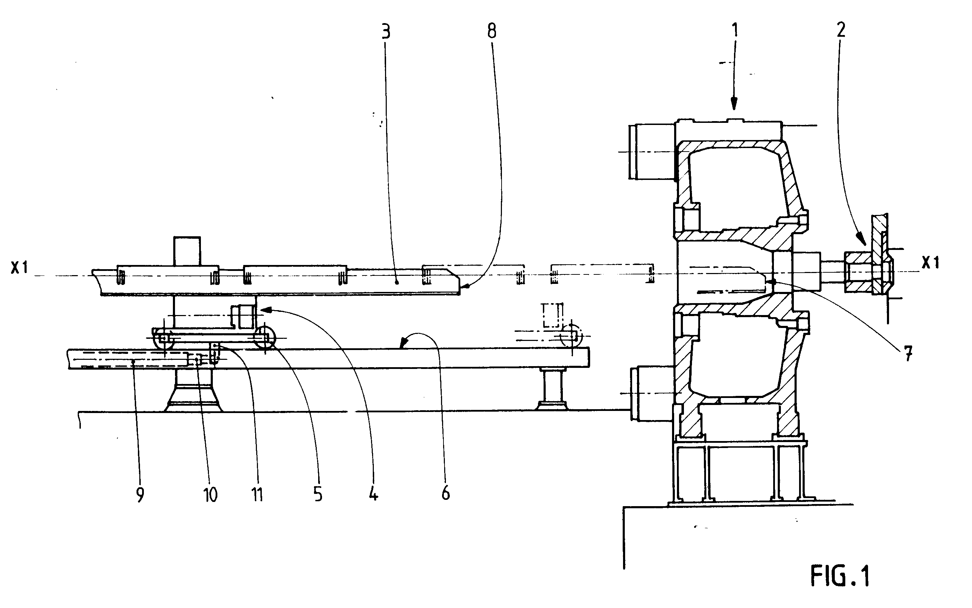

On voit figure 1 une représentation schématique en élévation d'un mode de réalisation du dispositif extracteur suivant l'invention. On voit du côté droit de la figure l'extrémité 1 d'une presse d'extrusion munie d'une filière 2 dans le prolongement de laquelle est placée une goulotte 3 montée sur berceaux, seul le berceau 4 étant représenté. Ces berceaux sont munis de galets de roulement tels que 5 aptes à se déplacer sur des rails tels que 6. Au cours de l'opération d'extrusion de tubes en acier le métal de la billette, porté à température le plus souvent supérieure à 900° C et logé dans le conteneur non représenté de la presse passe à travers la filière 2 sous la poussée du piston, également non représenté, et s'engage sous forme d'un tube dans la goulotte 3 qui le guide dans le prolongement de l'axe X1 - X1 de la filière. Avantageusement on munira l'ensemble berceaux 4, goulotte 3 d'un dispositif permettant de régler en hauteur la position de la goulotte de façon à ce que l'axe de la filière 2 soit légèrement au-dessus de l'axe du tube posé dans la goulotte de sorte à éviter que le tube butte sur l'entrée de la goulotte ou que celle-ci soit trop basse et oblige le tube à descendre dans celle-ci à partir de la filière, ce mouvement de descente pouvant entraîner une déformation du tube. Ce dispositif réglable en hauteur de la goulotte 3 n'est pas représenté ici. Dans sa position initiale, comme le montre la figure 1, l'extrémité amont de la goulotte 3 se trouve en 7 au voisinage de l'orifice de sortie du tube qui a traversé la filière 2. Un moyen de traction permet de déplacer cette goulotte de façon que son extrémité amont soit entraînée de la position 7 à la position 8. Ce moyen de traction est représenté de façon purement schématique à la figure 1. Il comporte un vérin 9 logé entre les rails 6 dont le piston 10 est relié à un bras 11 solidaire du berceau 4. La course de ce vérin est suffisante pour dégager la goulotte 3 du voisinage de la filière et sa force est suffisante pour permettre l'extraction de leur extrémité arrière de la filière sans déformation de ces tubes et sans glissement de ces tubes par rapport au moyen de préhension.

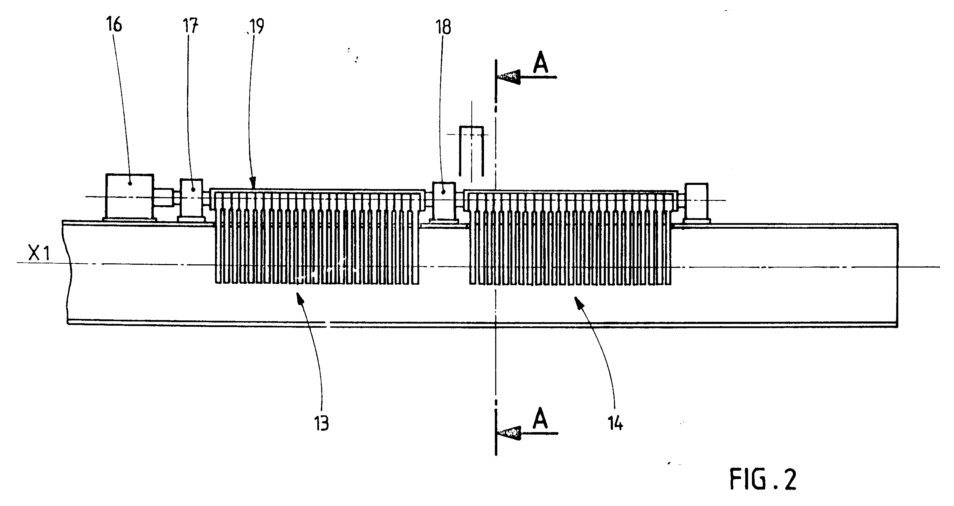

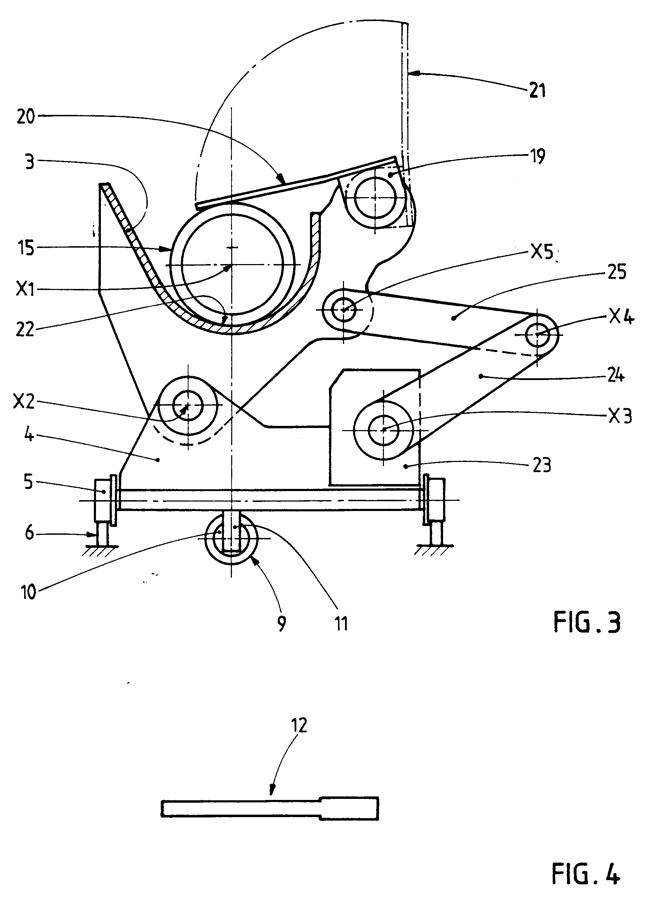

Un moyen de préhension est disposé près de l'extrémité amont de la goulotte. Comme le montrent plus clairement les figures 2 à 4 ce moyen de préhension comprend d'une part un ensemble de doigts métalliques tels que le doigt 12 représenté fig. 4. Il s'agit d'une lame allongée, plate dont une extrémité élargie est solidarisée par un moyen convenable tel que vissage, soudure ou brasure avec un arbre. Comme le montre la fig. 2 l'ensemble de doigts comprend 2 groupes de 25 doigts 13 et 14 disposés côte à côte, l'axe de chaque doigt étant sensiblement perpendiculaire à l'axe d'extrusion X1 - X1 qui lui-même se confond pratiquement avec l'axe du tube qui vient se loger dans la goulotte 3 (voir fig. 3). Un moyen moteur tel qu'un vérin rotatif 16, d'un type connu de l'homme du métier, permet de faire tourner sur ses paliers tels que 17, 18 l'arbre 19 de façon que les doigts tels que 20 viennent en appui contre la paroi du tube 15 comme le montre la figure 3, ou bien libèrent le tube et viennent en position par exemple verticale comme indiqué en tirets en 21 sur la même figure. Le vérin 16 et les paliers tels que 17, 18 de l'arbre 19 sont solidaires de la goulotte elle-même comme le montre la figure 2. Des moyens de butée non représentés empêchent tout déplacement dans le sens parallèle à l'axe d'extrusion de l'arbre par rapport à la goulotte. Le couple exercé par le vérin 16 sur l'arbre 19 est ajustable par des moyens connus de l'homme du métier de façon que la force de serrage exercée sur la paroi du tube par chacun des doigts tels que 20, force qui applique le tube contre la surface d'appui 22, elle-même solidaire de la goulotte 3 ou constituée ici par la goulotte 3, entraîne seulement une déformation élastique des doigts tels que 20 et n'entraîne pas de déformation permanente inacceptable du tube 15. Des essais de routine permettent de déterminer d'une part la force de traction qu'il est nécessaire d'exercer sur le tube 15 pour arracher son extrémité de la filière 2 et d'autre part la pression maximale admissible par unité de longueur sur la paroi du tube 15. On en déduit, en tenant compte du coefficient moyen de frottement du tube 15 sur la surface d'appui 22 et sur les doigts, l'étendue de la portée qui doit être réalisée le long du tube par l'ensemble des doigts et par la surface d'appui correspondante. On en déduit également le couple qu'il convient d'appliquer à l'arbre 19 au moyen du vérin rotatif 16.

L'expérience a montré la nécessité de mettre en oeuvre de nombreux doigts élastiques afin de prendre en compte les irrégularités et la forme réelle du tube brut d'extrusion, un mors monobloc même de grande longueur ne pouvant pas répartir les contraintes sur sa longueur donc déformant localement le tube chaud ; ces irrégularités peuvent être par exemple constituées par des surépaisseurs localisées de verre lubrifiant en cours de solidification ou par des particules métalliques entraînées par les tubes. Grâce à l'élasticité de chaque doigt chacun de ceux-ci peut s'écarter en plus ou en moins de la position moyenne de l'ensemble des doigts tout en continuant a exercer sur la paroi une force de serrage qui ne s'écarte que de façon limitée de la force de serrage moyenne au niveau de chaque doigt.

A titre d'exemple, dans le cas d'un tube de 35 mm de diamètre extérieur et 3,5 mm d'épaisseur on peut admettre, pour un acier au carbone de type courant, d'exercer une force de pression au moyen des doigts sur la paroi du tube, le long d'une génératrice d'environ 1 à 4 kg par mm linéaire pour une température du tube d'environ 1100° C. On voit que l'utilisation d'un ensemble de 50 doigts ayant chacun une largeur de par exemple 30 mm permet d'exercer sur le tube une force de serrage de l'ordre de 1,5 à 6 tonnes et permet donc en tenant compte d'un coefficient de frottement du tube d'environ 0,2 sur les doigts et la surface d'appui 22 d'exercer un effort de traction sur le tube, au moyen du vérin 9 par l'intermédiaire de la goulotte 3 qui peut atteindre 600 à 2400 kg. Les essais montrent qu'une telle force de traction exercée sur le tube encore à température très élevée permet l'extraction de son extrémité arrière de la filière dans tous les cas où il ne reste pas de quantité importante de métal en amont de cette filière. Un tel résultat est de plus obtenu sans déformation inacceptable du tube. La traction est effectuée sur la goulotte de la façon qui a été décrite plus haut en mettant en oeuvre le vérin 9, vérin dont on ajuste la pression maximale de fluide pour limiter l'effort à une valeur non supérieure à une limite prédéterminée. Après extraction du tube de la filière, le vérin rotatif 16 permet de relever l'ensemble des doigts tels que 20 comme on le voit en 21 à la fig. 3. On peut alors effectuer le basculement latéral de la goulotte 3 en la faisant tourner autour de l'axe X2 au moyen duquel elle est articulée par rapport au berceau 4. Un vérin de basculement 23 solidaire du berceau 4 actionne les bras 24 et 25 articulés autour des axes X3, X4 et X5 qui provoquent le basculement latéral de la goulotte 3 et la chute du tube 15 qui est ensuite transporté vers des moyens de transformation à froid et/ou finition non représentés. Il suffit ensuite de relever la goulotte au moyen du même vérin 23 puis de la ramener à sa position initiale vers l'amont de façon que son extrémité amont se trouve à nouveau en 7 au voisinage de la sortie de la filière 2. Ce retour vers l'amont est réalisé au moyen du vérin de traction 9 qui est à double effet. D'autres moyens peuvent être utilisés pour effectuer la traction de la goulotte suivant l'axe d'extrusion et son retour à sa position initiale. On peut en particulier faire appel à un dispositif à pignon et crémaillère connu également de l'homme du métier.

Lorsqu'une goulotte est utilisée pour la réception du tube obtenu par extrusion, celle-ci doit souvent comporter des moyens d'isolation thermique et/ou de refroidissement ainsi que des joints de dilatation pour éviter la déformation du berceau. Il s'agit là de techniques bien connues de l'homme de métier.

Les caractéristiques des doigts et en particulier leur épaisseur, la longueur de bras de levier entre le point de contact avec la paroi du tube et l'axe de l'arbre d'entraînement, et enfin le type de métal ou alliage utilisé et ses caractéristiques mécaniques, sont déterminés en fonction des conditions opératoires par l'homme du métier à la suite d'essais de routine.

## Revendications

1. Dispositif extracteur pour tube métallique obtenu par extrusion à chaud à travers la filière (2), d'une presse (1) permettant d'entraîner l'extrémité amont du tube de la filière sans endommager une partie courante de celui-ci caractérisé en ce qu'il comporte, disposé sur la ligne de sortie du tube en aval de la filière, un moyen de préhension de ce tube comprenant un ensemble de doigts métalliques élastiques (20) qui coopèrent avec une surface d'appui (22), l'une des deux extrémités de chacun de ces doigts étant solidaire d'un moyen d'entraînement et de serrage qui permet de les déplacer simultanément de façon à les amener au contact de la paroi extérieure du tube et à exercer sur celui-ci une force de serrage qui l'applique contre une surface d'appui (22), les doigts subissant seulement une déformation élastique et la contrainte exercée sur la paroi du tube (15) n'entraînant pas de déformation permanente inacceptable, et en ce qu'un moyen de traction (9) est relié de façon directe ou indirecte au moyen de préhension de façon à déplacer celui-ci, et donc l'ensemble des doigts (20) parallèlement à l'axe d'extrusion (X1 - X1) en direction de l'aval en entraînant le tube, grâce à la pression exercée par l'ensemble des doigts sur sa paroi la force de traction ainsi appliquée au tube permettant d'extraire l'extrémité amont de celui-ci de la filière.

2. Dispositif suivant revendication (1) caractérisé en ce que le moyen d'entraînement et de serrage des doigts comporte au moins un arbre (19), sensiblement parallèle à l'axe d'extrusion (X1 - X1), avec lequel chaque doigt (20) est solidarisé par une de ses extrémités et au moins un moyen moteur (16) qui entraîne en rotation cet arbre (19), en exerçant sur celui-ci un couple déterminé de façon que les doigts (20) viennent en appui contre la paroi du tube en exerçant sur celui-ci la pression voulue.

3. Dispositif suivant revendication 1 ou 2 caractérisé en ce que les doigts (20) sont disposés de façon à venir en appui sur la partie supérieure de la paroi du tube la surface d'appui (22) se trouvant au-dessous du tube.

4. Dispositif suivant l'une des revendications 1 à 3 caractérisé en ce que la surface d'appui est solidaire d'une goulotte de guidage du tube au moment de l'extrusion.

5. Dispositif suivant la revendication 4 caractérisé en ce que la surface d'appui est constituée par la goulotte.

6. Dispositif suivant l'une des revendications 1 à 5 caractérisé en ce que la surface d'appui (22) et l'ensemble des doigts (20) sont reliés entre eux de façon à ne pas pouvoir se déplacer de façon relative les uns par rapport aux autres suivant l'axe d'extrusion.

7. Dispositif suivant revendication 6 caractérisé en ce que lorsque la surface d'appui est solidaire d'une goulotte (3), les doigts (20) sont solidarisés par une de leurs extrémités avec un arbre (19) monté sur des paliers (17, 18) solidaires de la goulotte (3), des moyens de butée empêchant le déplacement relatif de l'arbre par rapport à la goulotte parallèlement à l'axe d'extrusion (X1 - X1).

8. Dispositif suivant l'une des revendications 1 à 7 caractérisé en ce que la surface d'appui (22) est mobile parallèlement à l'axe d'extrusion grâce à des moyens de guidage.

9. Dispositif suivant revendication 8 caractérisé en ce que lorsque la surface d'appui (22) est solidaire d'une goulotte (3) l'ensemble est monté sur un berceau 4 pourvu des moyens de guidage (5, 6) ce berceau étant lui-même relié au moyen de traction (9) qui permet l'extraction de l'arrière du tube (15) de la filière (2).

10. Dispositif suivant revendication 9 caractérisé en ce que la goulotte (3) est articulée par rapport au berceau (4) autour d'un axe (X2) parallèle à l'axe d'extrusion, (X1 - X1) un moyen de basculement permettant de faire tourner la goulotte autour de cet axe après extraction du tube de la filière et desserrage des doigts de façon à provoquer la chute du tube.

11. Dispositif suivant l'une des revendications 1 à 10 caractérisé en ce que le moyen de traction du tube parallèlement à l'axe d'extrusion est un vérin à double effet (9).

12. Dispositif suivant l'une des revendications 1 à 11 caractérisé en ce que l'ensemble de doigts comporte un minimum de 10 doigts agissant sur une longueur de tube totale d'au moins 50 cm.

## Claims

1. Extracting device for a metal tube obtained by hot extrusion through the die (2) of a press (1) making it possible to move the upstream end of the tube from the die without damaging said tube characterized in that, located in the outlet line of the tube downstream of the die, it comprises a means for gripping said tube having a group of elastic metal fingers (20) cooperating with a bearing surface (22), one of the two ends of each of these fingers being joined to a driving and clamping means making it possible to simultaneously displace said fingers so as to bring them into contact with the outer wall of the tube and exert on the tube a clamping force applying the tube to a bearing surface (22), the fingers only undergoing an elastic deformation and the stress exerted on the wall of tube (15) causing no unacceptable permanent deformation and in that a traction means (9) is connected in a direct or indirect manner to the gripping means, so as to displace said gripping means and therefore the group of fingers (20) parallel to the extrusion axis (XI-XI) in the downstream direction displacing the tube, as a result of the pressure exerted by the group of fingers on its wall, the thus applied traction force making it possible to extract the upstream end of the tube from the die.

2. Device according to claim 1, characterized in that the driving and clamping means of the fingers has at least one shaft (19) substantially parallel to the extrusion axis (XI-XI), to which each finger (20) is joined by one of its ends and at least one motor means (16) rotating said shaft (19), by exerting thereon a torque established in such a way that the fingers (20) bear against the tube wall by exerting thereon the desired pressure.

3. Device according to claims 1 or 2, characterized in that the fingers (20) are arranged so as to bear on the upper part of the tube wall, the bearing surface (22) being located below the tube.

4. Device according to one of the claims 1 to 3, characterized in that the bearing surface is integral with a chute for guiding the tube at the time of extrusion.

5. Device according to claim 4, characterized in that the bearing surface is constituted by the chute.

6. Device according to one of the claims 1 to 5, characterized in that the bearing surface (22) and the group of fingers (20) are interconnected so as not to be able to move relative to one another along the extrusion axis.

7. Device according to claim 6, characterized in that when the bearing surface is integral with a chute (3), the fingers (20) are joined by one of their ends to a shaft (19) mounted on bearings (17,18) integral with the chute (3), abutment means preventing the relative displacement of the shaft with respect to the chute parallel to the extrusion axis (XI-XI).

8. Device according to one of the claims 1 to 7, characterized in that the bearing surface (22) is mobile parallel to the extrusion axis as a result of guide means.

9. Device according to claim 8, characterized in that when the bearing surface (22) is joined to a chute (3), the group is mounted on a cradle (4) provided with guide means (5,6), said cradle being connected to traction means (9), so as to permit the extraction of the rear of tube (15) from die (2).

10. Device according to claim 9, characterized in that the chute (3) is articulated with respect to cradle (4) about an axis (X2) parallel to the extrusion axis (XI-XI), a tilting or pivoting means making it possible to rotate the chute about said axis following the extraction of the tube from the die and the release of the fingers so as to bring about the dropping of the tube.

11. Device according to one of the claims 1 to 10, characterized in that the means for pulling the tube parallel to the extrusion axis is a double-action jack (9).

12. Device according to one of the claims 1 to 11, characterized in that the group of fingers has at least 10 fingers acting over a total tube length of at least 50 cm.

## Patentansprüche

1. Ausziehvorrichtung für ein durch Warmextrusion durch die Düse (2) einer Presse (1) erhaltenes Metallrohr, die das Mitnehmen des Stromaufendes des Rohres von der Düse ohne Beschädigung eines laufenden Teils des Rohres ermöglicht,
dadurch **gekennzeichnet,**
daß sie, auf der Ausgangslinie des Rohres stromab der Düse angeordnet, ein Mittel zum Ergreifen dieses Rohres mit einer Gruppe von metallischen elastischen Fingern (20) aufweist, die mit einer Anlageoberfläche (22) zusammenwirken, wobei eines der beiden Enden jedes dieser Finger einstückig mit einem MIttel zum Antrieb und Klemmen ist, das ihre gleichzeitige Verschiebung derart ermöglicht, um sie in Kontakt mit der Außenwand des Rohres zu bringen und auf dieses eine Klemmkraft auszuüben, die es gegen eine Anlageoberfläche (22) drückt, wobei die Finger nur eine elastische Verformung erfahren und der auf die Wand des Rohres (15) ausgeübte Druck zu keiner dauernden unannehmbaren Verformung führt, und
daß ein Zugmittel (9) in direkter oder indirekter Weise mit dem Ergreifungsmittel derart verbunden ist, um dieses und damit die Gruppe der Finger (20) parallel zur Extrusionsachse (X1-X1) in Stromabrichtung zu verschieben, wobei das Rohr dank des durch die Gruppe der Finger auf seine Wand ausgeübten Drucks mitgenommen wird und die so auf das Rohr ausgeübte Zugkraft das Ausziehen dessen Stromaufendes aus der Düse ermöglicht.

2. Vorrichtung nach Anspruch 1,
dadurch gekennzeichnet,
daß das Mittel zum Antrieb und Klemmen der Finger wenigstens eine zur Extrusionsachse (X1-X1) etwa parallele Welle (19)/mit der jeder Finger (20) durch eines seiner Enden fest verbunden ist, und wenigstens ein Antriebsmittel (16) aufweist, das diese Welle (19) in Drehung versetzt, wobei es auf sie ein bestimmtes Drehmoment derart überträgt, daß die Finger (20) in Anlage an der Wand des Rohres unter Ausübung des gewünschten Drucks auf sie kommen.

3. Vorrichtung nach Anspruch 1 oder 2,
dadurch gekennzeichnet,
daß die Finger (20) so angeordnet sind, daß sie in Anlage auf dem oberen Teil der Wand des Rohres kommen, wobei sich die Anlageoberfläche (22) unterhalb des Rohres befindet.

4. Vorrichtung nach einem der Ansprüche 1 bis 3,
dadurch gekennzeichnet,
daß die Anlageoberfläche einstückig mit einer Rinne zur Führung des Rohres im Augenblick der Extrusion ist.

5. Vorrichtung nach Anspruch 4,
dadurch gekennzeichnet,
daß die Anlageoberfläche von der Rinne gebildet wird.

6. Vorrichtung nach einem der Ansprüche 1 bis 5,
dadurch gekennzeichnet, daß
die Anlageoberfläche (22) und die Gruppe der Finger (20) untereinander derart verbunden sind, daß sie sich nicht relativ zueinander längs der Extrusionsachse verschieben können.

7. Vorrichtung nach Anspruch 6,
dadurch gekennzeichnet,
daß die Finger (20), wenn die Anlageoberfläche einstückig mit einer Rinne (3) ist, durch eines ihrer Enden mit einer auf mit der Rinne (3) einstückigen Lagern (17, 18) montierten Welle (19) fest verbunden sind, wobei Anschlagmittel die Relativverschiebung der Welle gegenüber der Rinne parallel zur Extrusionsachse (X1-X1) verhindern.

8. Vorrichtung nach einem der Ansprüche 1 bis 7,
dadurch gekennzeichnet,
daß die Anlageoberfläche (22) dank Führungsmitteln parallel zur Extrusionsachse beweglich ist.

9. Vorrichtung nach Anspruch 8,
dadurch gekennzeichnet,
daß, wenn die Anlageoberfläche (22) einstückig mit einer Rinne (3) ist, die Einheit auf einem mit Führungsmitteln (5, 6) versehenen Rahmen (4) montiert ist, der seinerseits mit dem Zugmittel (9) verbunden ist, das das Ausziehen von hinten des Rohres (15) aus der Düse (2) ermöglicht.

10. Vorrichtung nach Anspruch 9,
dadurch gekennzeichnet,
daß die Rinne (3) bezüglich des Rahmens (4) um eine zur Extrusionsachse (X1-X1) parallele Achse (X2) angelenkt ist, wobei ein Schwenkmittel ermöglicht, die Rinne um diese Achse nach Ausziehen des Rohres aus der Düse und Loslösung der Finger zwecks Abgabe des Rohres zu verdrehen.

11. Vorrichtung nach einem der Ansprüche 1 bis 10,
dadurch gekennzeichnet,
daß das Mittel zum Ziehen des Rohres parallel zur Extrusionsachse eine doppelt wirkende Winde (9) ist.

12. Vorrichtung nach einem der Ansprüche 1 bis 11,
dadurch gekennzeichnet,
daß die Fingergruppe wenigstens 10 Finger aufweist, die auf einer Gesamtrohrlänge von wenigstens 50 cm einwirken.
